Europäisches Patentamt

European Patent Office

Office européen des brevets

(19)

(11) Veröffentlichungsnummer: **0 232 483**
**B1**

(12) # EUROPÄISCHE PATENTSCHRIFT

(45) Veröffentlichungstag der Patentschrift:
18.07.90

(51) Int. Cl.⁵: **B60R 22/20**

(21) Anmeldenummer: 86115812.9

(22) Anmeldetag: 14.11.86

(54) Vorrichtung zur stufenweisen Höhenverstellung eines Befestigungs- oder Umlenkpunktes für einen Sicherheitsgurt o. dgl.

(30) Priorität: 01.02.86 DE 3603140

(43) Veröffentlichungstag der Anmeldung:
19.08.87 Patentblatt 87/34

(45) Bekanntmachung des Hinweises auf die Patenterteilung:
18.07.90 Patentblatt 90/29

(84) Benannte Vertragsstaaten:
AT BE DE ES FR GB IT NL SE

(56) Entgegenhaltungen:
EP-A- 0 104 620
EP-A- 0 127 690
DE-A- 2 303 222
DE-A- 3 400 214

(73) Patentinhaber: Griesemer, Albert, Dorfwiese 3,
D-5438 Westerburg-Gershasen(DE)

(72) Erfinder: Griesemer, Albert, Dorfwiese 3,
D-5438 Westerburg-Gershasen(DE)

(74) Vertreter: Grommes, Karl F., Dr., Mehlstrasse 14-16,
D-5400 Koblenz(DE)

ACTORUM AG

## Beschreibung

### Technisches Gebiet

Die Erfindung betrifft eine Vorrichtung zur stufenweisen Höhenverstellung eines Befestigungs- oder Umlenkpunktes für einen Sicherheitsgurt o. dgl., bestehend aus einer im wesentlichen flach gestalteten sowie flach anzuordnenden Führungsschiene und einer auf der Führungsschiene verschieblichen, auf deren Breitseite wirkenden und den Befestigungs- oder Umlenkpunkt für einen Sicherheitsgurt darbietenden Führungshülse, wobei Rastnasen einerseits und entsprechende Aussparungen andererseits derart vorgesehen sind, daß die Führungshülse zu Arretierzwecken quer zur eigentlichen Verschieberichtung mit der Führungsschiene in festen Eingriff bringbar ist, sowie einem Federteil, welches zwischen Führungsschiene und Führungshülse angeordnet ist und die Führungshülse in Arretierstellung halten soll.

Derartige Vorrichtungen werden insbesondere für Sicherheitsgurte in Kraftfahrzeugen benötigt. Bekanntlich ist es dabei üblich, einen Umlenkpunkt am Fahrzeugholm oberhalb der Schulter des Gurtträgers vorzusehen, während die Enden des Sicherheitsgurtes in der Regel am Fahrzeugboden fixiert werden, und zwar ein Ende an einem Aufrollautomat. Am Umlenkpunkt werden meist spezielle Umlenkbeschläge angebracht. Dies sind vor allem Ringe, Ösen o. dgl. zusammen mit einem Einschraubteil. Für letzteres ist dann an der Führungshülse ein Schraubgewinde vorgesehen.

Da die Wirksamkeit der Sicherheitsgurte zu einem nicht unerheblichen Teil von ihrem anatomisch richtigen Sitz abhängt und dieser wiederum maßgeblich über den Umlenkpunkt je nach Körpergröße und Haltung zu beeinflussen ist, kommt den Vorrichtungen zur Höhenverstellung des Umlenkpunktes große Bedeutung zu. Es hat deshalb bis jetzt nicht an Vorschlägen gefehlt, entsprechende Vorrichtungen anzugeben. Den meisten haftet jedoch der Nachteil an, daß sie recht kompliziert oder aber nicht haltbar genug sind.

### Stand der Technik

Zu den verhältnismäßig einfachen Vorrichtungen zählen diejeniegen gemäß dem Oberbegriff. Bei einer bekannten Vorrichtung dieser Art sind Rastnasen an einer Schmalseite der Führungsschiene vorgesehen und besitzt die Führungshülse an derselben Schmalseite eine Aussparung, mit der sie in den Bereich einer Rastnase quer zur eigentlichen Verschieberichtung gerückt werden kann. Wenn Führungshülse und Führungsschiene in Eingriff sind, werden sie von einem Federteil weiter arretiert. Letzteres befindet sich in dem schmalen Spalt zwischen der den Rastnasen abgewandten Schmalseite der Führungsschiene und der entsprechenden Schmalseite der Führungshülse. Wegen seiner sehr geringen Breite und seiner dadurch bedingten instabilen Lage muß für das Federteil noch ein spezielles Einsatzteil vorgesehen werden. Dieses wird vorzugsweise aus Kunststoff gefertigt und dient der Führung und Halterung des Federteils. Ohne eine solches Einsatzteil müßte mit erheblichen Betriebsstörungen gerechnet werden.

Dieser bekannten Vorrichtung haften insgesamt etliche Nachteile an. Wie geschildert, muß neben der Führungsschiene, der Führungshülse und dem Federteil noch ein weiteres Bauteil aus einem anderen Material vorgesehen werden. Herstellung und Montage verteuern sich dadurch natürlich. Da im Belastungsfalle (Aufprall) auch stärkere seitliche Zugkräfte wirksam werden, kann die Führungsschiene immer nur so montiert werden, daß sich die Führungshülse in die Schmalseite der Führungsschiene mit den Rastnasen zieht. Die Montage erfordert also besondere Aufmerksamkeit. Außerdem kann es auch erforderlich sein, für die linke und rechte Fahrzeugseite verschiedene Führungsschienen, nämlich einmal mit Rastnasen an der linken und einmal an der rechten Schmalseite vorzusehen, also zwei verschiedene Typen zu fertigen. Dies kommt insbesondere dann in Betracht, wenn das obere und untere Ende der Führungsschiene unterschiedlich ausgebildet sind, beispielsweise einerseits mit einem Rundloch und andererseits mit einem Langloch o. dgl. Schließlich hat sich auch gezeigt, daß diese Ausführungsform keine allzu hohen Zugkräfte aufnehmen kann. Gerade an der mit Rastnasen und, damit einhergehend, mit Aussparungen versehenen Schmalseite kommt es nämlich leicht zur Zerstörung und zum Abriß. Offenbar handelt es sich dabei um eine Schwächungsstelle.

Es sind auch bereits Vorschläge bekannt, nach denen die Führungsschiene gleichmäßiger beansprucht wird. Allerdings wird dieser Vorteil durch sonstige Nachteile erkauft. So findet man insbesondere eine Ausführungsform anderer Art in der Praxis, bei der die Führungsschiene einen Querschnitt von etwa der Form eines liegenden C aufweist und an beiden nach innen gerichteten Schmalseiten Aussparungen besitzt. In der Führungsschiene ist ein Schlitten verschiebbar, an dem ein Umlenkbeschlag angebracht werden kann. Der Schlitten umfaßt einen Mutternkäfig, eine speziell geformte Mutter, ein bewegliches Halteteil mit zwei Rastnasen zum Eingreifen in die Aussparungen der Führungsschiene, ein Federteil sowie einen speziellen Hebel zum Ausklinken des Halteteils.

Es bedarf keiner besonderen Betonung, daß jene bekannte Ausführungsform sehr aufwendig und kompliziert ist. So müssen eine Vielzahl von Teilen gefertigt und montiert werden. Es ergibt sich eine beträchtliche Bauhöhe sowie ein hohes Stückgewicht. Zwangsläufig ist diese Ausführungsform auch recht teuer. Aber auch die Sicherheit, d.h. die Belastbarkeit läßt zu wünschen übrig. Schließlich kommen nur zwei Rastnasen zum Eingriff und vermögen auch die eingebogenen Schmalseiten keine zu hohen Zugkräfte aufzunehmen, noch dazu wo sie durch die Aussparungen geschwächt sind.

Eine weitere Lösung ist durch die EP-A 0 127 690 bekannt. Auch dabei handelt es sich um einen Gegenstand anderer Gattung. Seine Führungsschiene ist nicht im wesentlichen flach angeordnet, sondern hochgestellt. Sie wirkt auch nicht mit einer Führungshülse zusammen, sondern mit einer Art Bügel mit Aussparungen, mithin einem anders gestalteten Führungsteil. Es sind dies aber nicht nur formale Unterschiede, sondern bereits funktionale Unterschiede, wie sich in der unerwünscht höheren Bauart zeigt. Der Gegenstand jener Veröffentlichung verkörpert also bereits in seinen grundlegenden Merkmalen einen anderen Typus von Höhenversteller.

Wie bereits erwähnt, kennt jene Veröffentlichung keine Führungshülse und kann folglich dieses Merkmal auch nicht weiterbilden. Analoges gilt für das Zusammenwirken der Führungshülse mit der anders angeordneten Führungsschiene. Auch diesbezüglich bleiben nicht nur formale Unterschiede festzustellen, sondern recht gravierende funktionale Unterschiede. So vermag jene bekannte Vorrichtung nicht, hohen und plötzlichen Zugkräften wirksam zu widerstehen. Sie unterliegt vielmehr im Extremfall der Gefahr einer Deformation und Zerstörung. Für den Benutzer besteht damit ein erhebliches Sicherheitsrisiko fort.

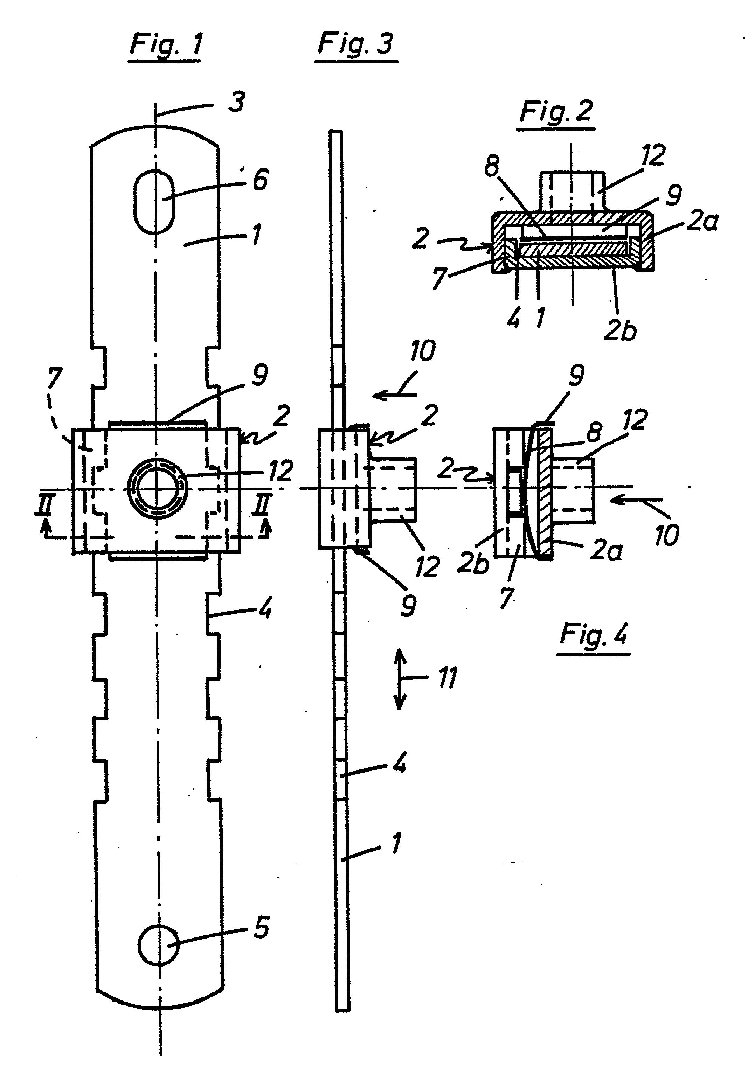

Selbst wenn die Führungsschiene und das Führungsteil sehr kräftig ausgeführt würden, wäre damit die Gefahr noch nicht gebannt, da die Art des Zusammenwirkens (Eingriffs) keine extremen Kräfte oder Drücke zuläßt. Wie beispielsweise aus Fig. 1 der Veröffentlichung zu ersehen ist, stehen Führungsschiene und Führungsteil in Eingriff wie zwei gegeneinander gekreuzte Messerschneiden. Damit erfüllt die bekannte Ausführungsform weder die hier zu stellenden Anforderungen an eine günstige Bauweise (mit geringer Bauhöhe), noch an eine ausreichende Sicherheit.

## Darstellung der Erfindung

Die Erfindung hat sich deshalb zur Aufgabe gesetzt, eine Vorrichtung der eingangs genannten Art mit ihrem verhältnismäßig einfachen Aufbau weiter zu verbessern, insbesondere auch hinsichtlich ihrer Belastbarkeit.

Gelöst wird diese Aufgabe nach dem Vorschlag der Erfindung auf überraschend einfache Weise dadurch, daß nach vorne weisende Rastnasen oder Aussparungen an (der hinteren Breitseite) der Führungshülse vorgesehen sind und entsprechende Aussparungen bzw. nach hinten weisende Rastnasen auf der Achse der Führungsschiene oder symmetrisch dazu angeordnet sind.

Anders als bisher umschließt die Führungshülse die im wesentlichen flache Führungsschiene jetzt vollständig an den beiden Schmalseiten. Dagegen finden sich ausschließlich an der hinteren Breitseite der Führungshülse für einen Eingriff mit der Führungsschiene Rastnasen, Vorsprünge, Zähne o. dgl., während die Führungsschiene auf ihrer Achse oder symmetrisch dazu entsprechende Aussparungen aufweist. Rastnasen und Aussparungen können auch ebensogut umgekehrt angeordnet werden, d.h. die Rastnasen auf der Führungsschiene und die entsprechenden Aussparungen an der hinteren Breitseite der Führungshülse.

Wird die Führungshülse mit ihrer hinteren Breitseite gegen die Führungsschiene gedrückt und in Achsrichtung verschoben, rastet die Führungshülse bei nächster Gelegenheit ein. Ein Federteil arretiert die Führungshülse in dieser Stellung. Das Federteil besitzt dabei eine große Auflagefläche und kann deshalb recht breit gewählt und ohne weiteres montiert werden. Wie auch früher muß die Lage der Führungshülse und damit ihre Arretierstellung so gewählt werden, daß sie bei Belastung in der Arretierstellung verbleibt.

Anders als bisher wird die Führungsschiene jetzt gleichmäßiger beansprucht. Die bessere Lastverteilung infolge des vorgeschlagenen symmetrischen Aufbaus mit der Möglichkeit, eine Vielzahl von Zähnen o. dgl. gleichzeitig in Eingriff zu bringen, macht wesentlich stärkere Belastungen möglich. Dies hat sich eindeutig bei entsprechenden Zerreißversuchen gezeigt.

Vorteilhaft sind an beiden Schmalseiten der Führungsschiene rechtwinklige Aussparungen oder Rastnasen angeordnet.

Nach einem anderen Vorschlag sind auf der Achse der Führungsschiene Aussparungen oder Rastnasen von rundem oder rechteckigem Querschnitt angeordnet.

Vorteilhaft weisen die Rastnasen eine Höhe von etwa der Stärke der Führungsschiene bzw. der Stärke der hinteren Breitseite der Führungshülse auf.

In weiterer Ausgestaltung des Erfindungsgedankens ist die Führungshülse aus einem Oberteil mit der vorderen Breitseite und den beiden Schmalseiten sowie einem Unterteil mit der hinteren Breitseite und den Rastnasen oder Aussparungen gebildet.

Zweckmäßigerweise ist das Federteil eine breite Blattfeder mit aufgekanteten Enden.

## Kurze Beschreibung der Zeichnung

Weitere Einzelheiten der Erfindung werden nachfolgend anhand der Zeichnung für bevorzugte Ausführungsbeispiele beschrieben. Darin zeigen:

Figur 1 eine erfindungsgemäße Vorrichtung in Draufsicht,

Figur 2 die Vorrichtung von Figur 1 im Schnitt entlang der Linie II - II,

Figur 3 die Vorrichtung von Figur 1 in Seitenansicht,

Figur 4 die Führungshülse von Figur 3, teilweise geschnitten,

Figur 5 den Gegenstand der vorhergehenden Figuren in einer Explosionsdarstellung und die weiteren

Figuren 6 - 10 andere Ausführungsformen einer erfindungsgemäßen Vorrichtung, ebenfalls in Explosionsdarstellung.

Nach den Figuren 1 bis 4 ist auf eine Führungsschiene 1 eine Führungshülse 2 aufgeschoben. Die Führungsschiene 1 ist im Ausführungsbeispiel geradlinig und flach ausgebildet und weist an ihren Schmalseiten symmetrisch zu ihrer Achse 3 Aussparungen 4 von rechteckigem Verlauf auf. An ihren Enden besitzt die Führungsschiene 1 ein Rundloch 5 bzw. ein Langloch 6 zur Befestigung am Seitenholm eines Kraftfahrzeugs. Die Führungshülse 2 umschließt die Führungsschiene 1 derart, daß zur vorderen Breitseite der Führungshülse 2 hin ein freier Querschnitt besteht, welcher dem vollen Querschnitt der Führungsschiene 1 entspricht. Daran schließt sich in Richtung auf die hintere Breitseite eine Querschnittserweiterung an, in deren Bereich Rastnasen 7 o. dgl. vorgesehen sind. Letztere können in die Aussparungen 4 der Führungsschiene 1 zur Arretierung eingerückt werden.

In dieser Arretierstellung wird die Führungshülse 2 mittels eines Federteils, nämlich einer breiten Blattfeder 8, gehalten. Die Blattfeder 8 ist einfach zwischen der vorderen Breitseite der Führungshülse 2 und der Führungsschiene 1 eingesetzt, wobei sie aufgekantete Enden 9 besitzt und sich damit an der Führungshülse 2 ohne weiteres hält. Dank ihrer bogigen Form und einer Vorspannung verbleibt die Führungshülse 2 solange in festem Eingriff mit der Führungsschiene 1, bis eine stärkere Kraft in Richtung des Pfeiles 10 auf die Führungshülse 2 aufgeübt wird und letztere mit ihrer vorderen Breitseite bzw. der dazwischenliegenden, dann flachgedrückten Blattfeder 8 auf die Vorderseite der Führungsschiene 1 gerät.

In dieser ihrer Verschiebestellung läßt sich die Führungshülse 2 leicht auf- und abwärts in Richtung des Doppelpfeiles 11 bewegen, um ggf. eine günstigere Höhe für den Umlenkbeschlag einzustellen. Wird kein Druck mehr in Richtung des Pfeils 10 auf die Führungshülse 2 ausgeübt und sind die Rastnasen 7 mit den Aussparungen 4 zur Deckung gebracht, erfolgt ein Rückzug der Führungshülse 2 unter dem Einfluß der Blattfeder 8 in die in den Figuren 1 bis 4 dargestellte Arretierstellung.

Wie weiter ersichtlich, ist an der vorderen Breitseite der Führungshülse 2 außen eine Gewindehülse 12 als Befestigungsmöglichkeit für einem hier nicht nähere dargestellten Umlenkbeschlag angebracht. Im Falle eines Aufpralles werden an der Führungshülse 2 Zugkräfte in umgekehrter Richtung des Pfeiles 10 wirksam, so daß die Führungshülse 2 nicht aus ihrer Arretierstellung gelangen kann. Vielmehr läßt der günstige Formschluß eine beträchtliche Kraftübertragung von der Führungshülse 2 auf die Führungsschiene 1 zu.

Aus fertigungstechnischen Gründen kann die Führungshülse 2 aus einem Oberteil 2a (mit der vorderen Breitseite und den beiden Schmalseiten) und einem Unterteil 2b (mit der hinteren Breitseite und den Rastnasen 7) gebildet werden. Beide Teile können insbesondere miteinander verschweißt werden. Dieser in den Figuren 1 bis 4 bereits gezeigt Aufbau ist auch bei den weiteren Ausführungsbeispielen zugrunde-gelegt worden, nicht zuletzt, weil er in besonders anschaulicher Weise das Wesen der Erfindung erkennen läßt.

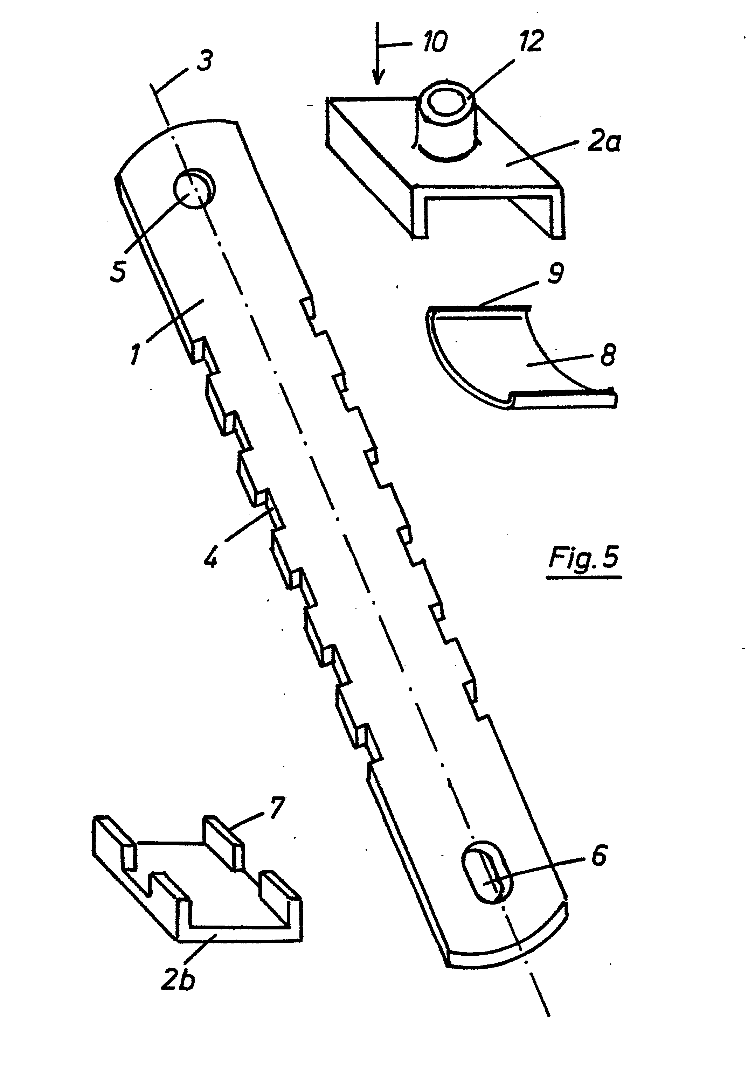

So ist der Figur 5 mit einem Blick zu entnehmen, daß nur wenige recht einfache Bauteile erforderlich sind, nämlich die flache Führungsschiene 1, die ggf. aus dem Oberteil 2a und dem Unterteil 2b gebildete Führungshülse 2 sowie die Blattfeder 8. Die Rastnasen 7 am Unterteil 2b entsprechen in ihrer Form grundsätzlich den Aussparungen 4 und begrenzen mit ihrer Höhe in der Führungshülse 2 den für das Verschieben auf der Führungsschiene 1 erforderlichen freien Querschnitt.

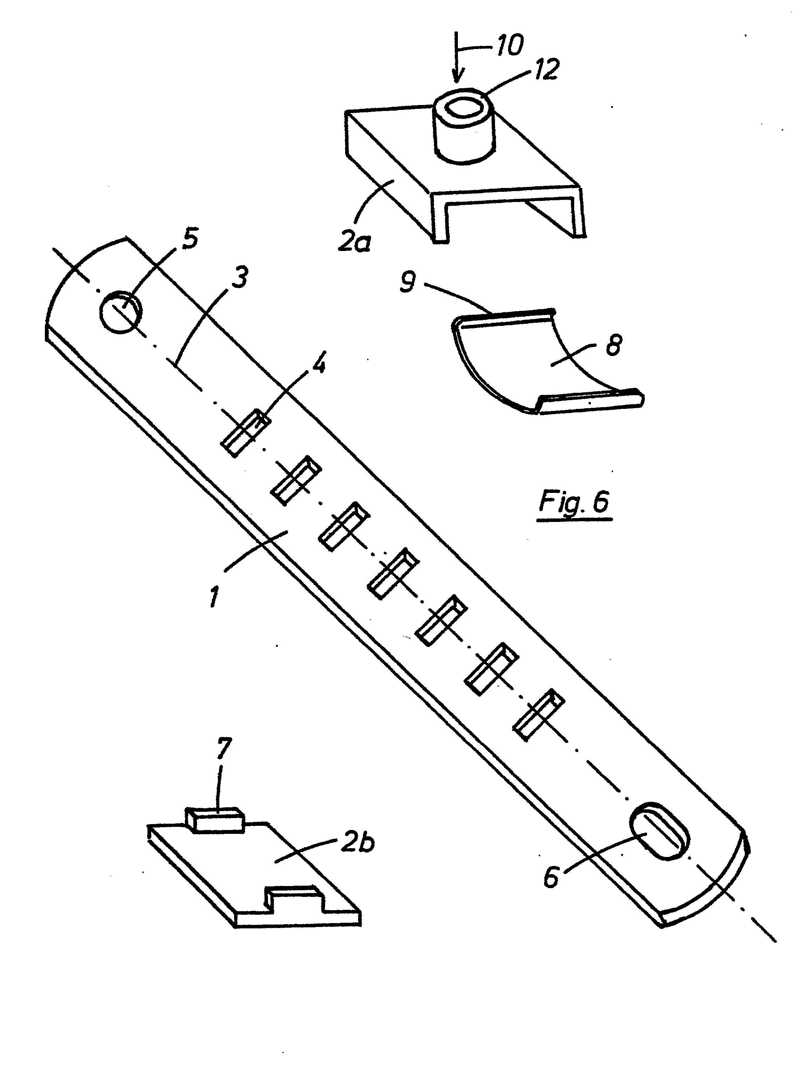

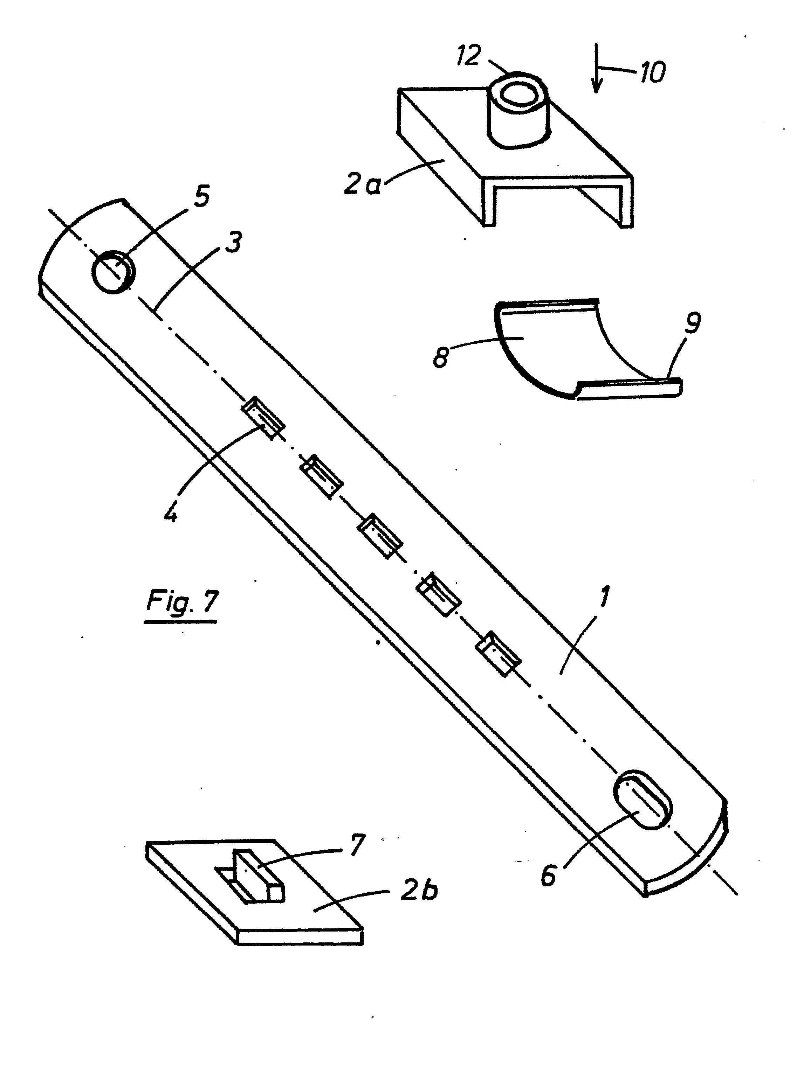

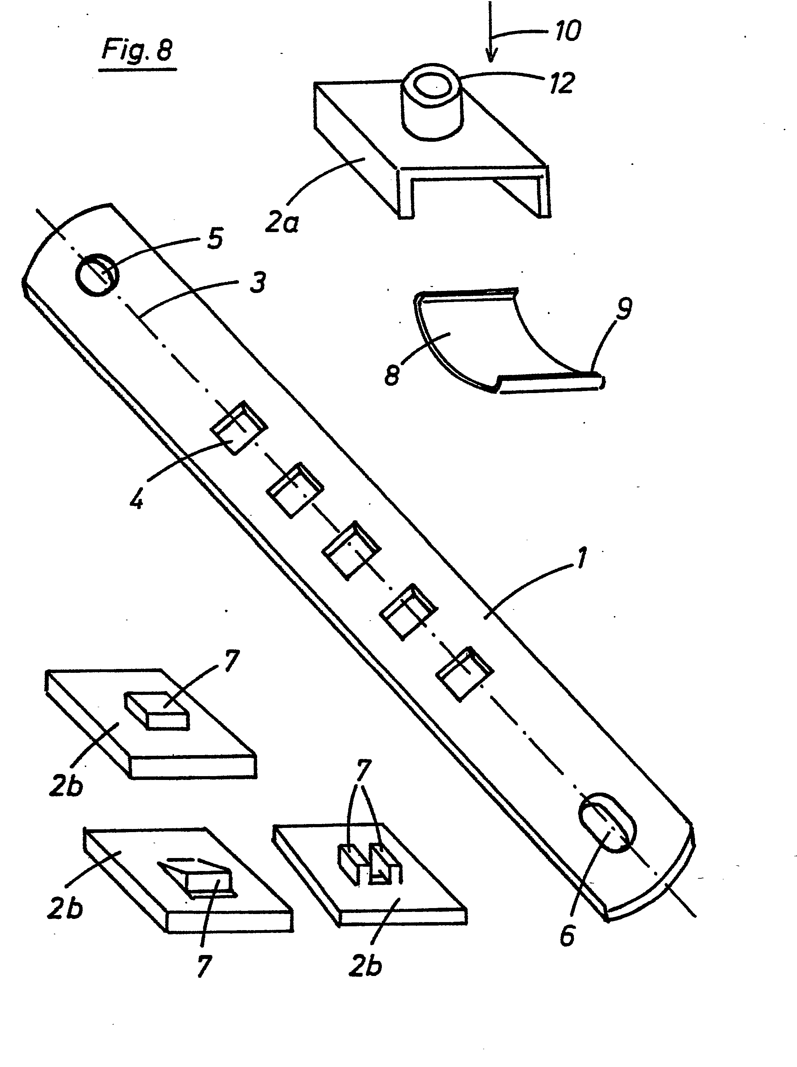

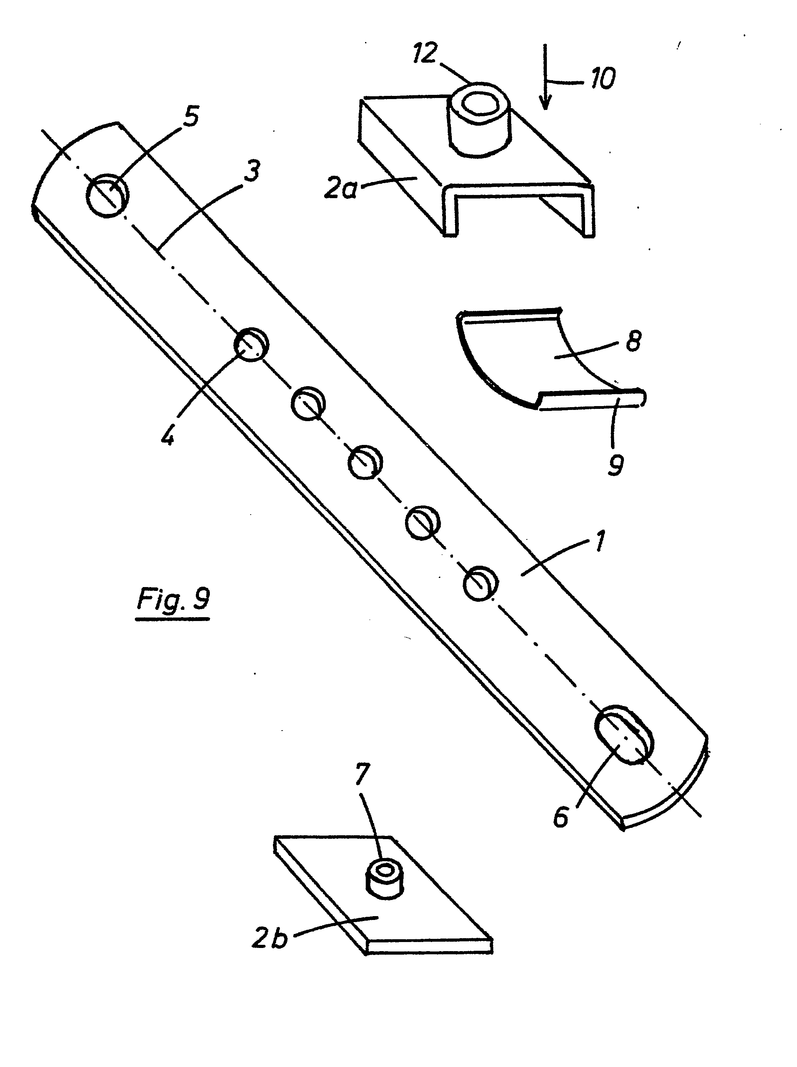

Wie die weiteren Figuren 6 bis 9 erkennen lassen, können die Aussparungen 4 im übrigen auch nur in einer Reihe vorgesehen werden. Sie verlaufen dann auf der Achse 3 der Führungsschiene 1. Ihre Form kann vielfältig sein, insbesondere auch annähernd quadratisch (Fig. 8) oder rund (Fig. 9). Die Rastnasen 7 können dabei in unterschiedlicher Weise gebildet sein, beispielsweise durch Stanzen, Biegen, Einsicken u. ä. Auch lassen sich Niete als Rastnasen verwenden, ebenso wie eingeschweißte oder preßgeschweißte Bolzen etc.

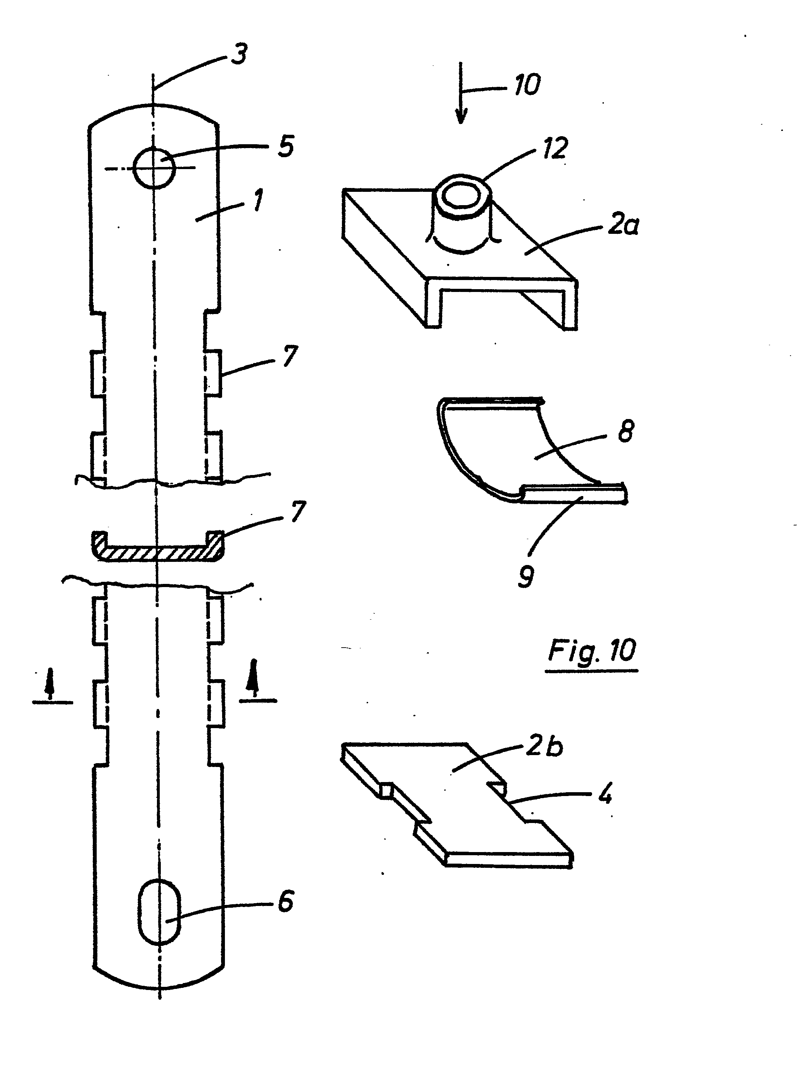

Mit der Figur 10 nun soll verdeutlicht werden, daß sich der Erfindungsgedanke auch in der Weise realisieren läßt, daß statt Rastnasen 7 Aussparungen 4 an der hinteren Breitseite der Führungshülse 2 vorgesehen sind. Dementsprechend sind dann Rastnasen 7 an der Führungsschiene 1 angeordnet, und zwar analog den Aussparungen 4 der vorausgegangenen Ausführungsbeispiele. Die Wirk- und Bedienungsweise bleibt im übrigen dieselbe.

Abschließend läßt sich sagen, daß Vorrichtungen gemäß der Erfindung über eine Vielzahl von Vorteilen verfügen. Sie besitzen zunächst eine geringe Bauhöhe. Dann sind sie symmetrisch aufgebaut und können dadurch sowohl an der linken wie rechten Fahrzeugseite ohne Unterschied eingesetzt werden. Sie lassen Aussparungen und Rastnasen vielfältiger Form wie auch in größerer Anzahl zu, wodurch Formschluß und Belastbarkeit optimiert werden können. Da sich der Aufbau auf nur wenige Bestandteile beschränkt, sind Herstellung und Montage jetzt einfacher und preiswerter. Schließlich erweist sich auch die Betätigung als besonders einfach und sicher.

## Patentansprüche

1. Vorrichtung zur stufenweisen Höhenverstellung eines Befestigungs- oder Umlenkpunktes für einen Sicherheitsgurt o. dgl., bestehend aus einer im wesentlichen flach gestalteten sowie flach anzuordnenden Führungsschiene (1) und einer auf der Führungsschiene verschieblichen, auf deren Breitseite wirkenden und den Befestigungs- oder Umlenkpunkt für einen Sicherheitsgurt darbietenden Führungshülse (2), wobei Rastnasen (7) einerseits und entsprechende Aussparungen (4) andererseits derart vorgesehen sind, daß die Führungshülse zu Arretierzwecken quer zur eigentlichen Verschieberichtung mit der Führungsschiene in festen Eingriff bringbar ist, sowie einem Federteil (8), welches zwischen Führungsschiene und Führungshülse angeordnet ist und die Führungshülse in Arretierstellung halten soll, dadurch gekennzeichnet, daß nach vorne weisende Rastnasen (7) oder Aussparungen (4) an der Führungshülse (2) vorgesehen sind und entsprechende Aussparungen (4) bzw. nach hinten weisende Rastnasen (7) auf der Achse (3) der Führungsschiene (1) oder symmetrisch dazu angeordnet sind.

2. Vorrichtung nach Anspruch 1, dadurch gekennzeichnet, daß an beiden Schmalseiten der Führungsschiene (1) rechtwinklige Aussparungen (4) oder Rastnasen (7) angeordnet sind.

3. Vorrichtung nach Anspruch 1, dadurch gekennzeichnet, daß auf der Achse (3) der Führungsschiene (1) Aussparungen (4) oder Rastnasen (7) von rundem oder rechteckigem Querschnitt angeordnet sind.

4. Vorrichtung nach einem der Ansprüche 1 bis 3, dadurch gekennzeichnet, daß die Rastnasen (7) eine Höhe von etwa der Stärke der Führungsschiene (1) bzw. der Stärke der hinteren Breitseite der Führungshülse (2) aufweisen.

5. Vorrichtung nach einem der Ansprüche 1 bis 4, dadurch gekennzeichnet, daß die Führungshülse (2) aus einem Oberteil (2a) mit der vorderen Breitseite und den beiden Schmalseiten sowie einem Unterteil (2b) mit der hinteren Breitseite und den Rastnasen (7) oder Aussparungen (4) gebildet ist.

6. Vorrichtung nach Anspruch 1, dadurch gekennzeichnet, daß das Federteil eine breite Blattfeder (8) mit aufgekanteten Enden (9) ist.

**Revendications**

1. Dispositif pour régler en hauteur par paliers un point de fixation ou de renvoi d'une ceinture de sécurité ou similaire, constitué par un rail de guidage (1) de forme plate pour l'essentiel et destiné à être disposé à plat, par un manchon de guidage (2) qui est mobile sur le rail de guidage, qui agit sur son grand côté et qui constitue le point de fixation ou de renvoi d'une ceinture de sécurité, des crans d'arrêt (7), d'une part, et des encoches correspondantes (4), d'autre part, étant prévus de telle manière que le manchon de guidage, à des fins de blocage, puisse être amené en prise fixe avec le rail de guidage, perpendiculairement à la direction de déplacement proprement dite, ainsi que par une pièce élastique (8) qui est disposée entre le rail de guidage et le manchon de guidage et qui est chargée de maintenir le manchon de guidage en position de blocage, caractérisé par le fait que des crans d'arrêt (7) dirigés vers l'avant ou des encoches (4) sont prévues sur le manchon de guidage (2) et que des encoches (4) correspondantes ou, respectivement, des crans d'arrêt (7) dirigés vers l'arrière sont disposés sur l'axe (3) du rail de guidage (1) ou symétriquement par rapport à lui.

2. Dispositif selon la revendication 1, caractérisé par le fait que des encoches (4) ou des crans d'arrêt (7) rectangulaires sont disposés sur les deux petits côtés du rail de guidage (1).

3. Dispositif selon la revendication 1, caractérisé par le fait que des encoches (4) ou des crans d'arrêt (7) à section transversale ronde ou rectangulaire sont disposés sur l'axe (3) du rail de guidage (1).

4. Dispositif selon l'une des revendications 1 à 3, caractérisé par le fait que les crans d'arrêt (7) présentent une hauteur qui est à peu près égale à l'épaisseur du rail de guidage (1) ou, respectivement, à l'épaisseur du grand côté postérieur du manchon de guidage (2).

5. Dispositif selon l'une des revendications 1 à 3, caractérisé par le fait que le manchon de guidage (2) est formé par une partie supérieure (2a) comprenant le grand côté antérieur et les deux petits côtés, ainsi que par une partie inférieure (2b) comprenant le grand côté postérieur et les crans d'arrêt (7) ou les encoches (4).

6. Dispositif selon la revendication 1, caractérisé par le fait que la pièce élastique est un ressort à lame (8) dont les bords (9) sont recourbés.

**Claims**

1. Device for the gradual vertical adjustment of an attachment- or deflection point for a safety belt or the like, consisting of a guide rail (1), which is of substantially flat construction and is also to be arranged flat, and of a guide sleeve (2) which is slidable on the guide rail, acts on the broad side thereof and presents the attachment- or deflection point for a safety belt, wherein detents (7) or provided on the one side and corresponding recesses (4) on the other side such that the guide sleeve, for locking purposes, is able to be brought transversely to the actual sliding direction in fixed engagement with the guide rail, and also consisting of a spring member (8), which is arranged between the guide rail and the guide sleeve and which is intended to hold the guide sleeve in the locking position, characterized in that forward-pointing detents (7) or recesses (4) are provided on the guide sleeve (2) and corresponding recesses (4) or rearward-pointing detents (7) are arranged on the axis (3) of the guide rail (1) or symmetrically thereto.

2. Device according to Claim 1, characterized in that on both narrow sides of the guide rail (1) rectangular recesses (4) or detents (7) are arranged.

3. Device according to Claim 1, characterized in that on the axis (3) of the guide rail (1) recesses (4) or detents (7) of round or rectangular cross-section are arranged.

4. Device according to one of Claims 1 to 3, characterized in that the detents (7) have a height of approximately the thickness of the guide rail (1) or respectively the thickness of the rear broad side of the guide sleeve (2).

5. Device according to one of Claims 1 to 4, characterized in that the guide sleeve (2) is formed from an upper part (2a) with the front broad side and the two narrow sides and also of a lower part (2b) with the rear broad side and the detents (7) or recesses (4).

6. Device according to Claim 1, characterized in that the spring member is a broad plate spring (8) with ends (9) turned over.

EP 0 232 483 B1

Fig. 1

Fig. 3

Fig. 2

Fig. 4

_Fig.5_

*Fig. 6*

12

10

2a

8

9

5

3

4

Fig. 7

1

7

2b

6

_Fig. 8_

Fig. 9

EP 0 232 483 B1

Fig. 10